(19) **Europäisches Patentamt**

**European Patent Office**

**Office européen des brevets**

(11) Veröffentlichungsnummer: **0 232 215 B1**

(12) **EUROPÄISCHE PATENTSCHRIFT**

(45) Veröffentlichungstag der Patentschrift: **29.04.92**

(21) Anmeldenummer: **87730002.0**

(22) Anmeldetag: **15.01.87**

(51) Int. Cl.⁵: **B60C 5/00**, B60C 17/02, B63C 11/04

(54) **Hohlkörper mit flexibler Hülle.**

(30) Priorität: **17.01.86 DE 3601691**

(43) Veröffentlichungstag der Anmeldung:
**12.08.87 Patentblatt 87/33**

(45) Bekanntmachung des Hinweises auf die
Patenterteilung:
**29.04.92 Patentblatt 92/18**

(84) Benannte Vertragsstaaten:
**AT BE CH DE ES FR GB GR IT LI LU NL SE**

(56) Entgegenhaltungen:
**CH-A- 470 994**
**DE-B- 1 278 869**
**FR-A- 1 306 990**
**FR-A- 1 525 490**
**GB-A- 1 442 815**

(73) Patentinhaber: **Simon, Jochen, Dipl.-Ing.**
**Bayernallee 42a**
**W-1000 Berlin 19(DE)**

Patentinhaber: **Stracke, Hans-Joachim,**
**Dipl.-Ing.**
**Fichtestrasse 27**
**W-1000 Berlin 61(DE)**

(72) Erfinder: **Simon, Jochen, Dipl.-Ing.**
**Bayernallee 42a**
**W-1000 Berlin 19(DE)**
Erfinder: **Stracke, Hans-Joachim, Dipl.-Ing.**
**Fichtestrasse 27**
**W-1000 Berlin 61(DE)**

(74) Vertreter: **Pfenning, Meinig & Partner**
**Mozartstrasse 17**
**W-8000 München 2(DE)**

## Beschreibung

Die Erfindung betrifft einen durch ein fließfähiges Medium von innen mit Druck beaufschlagbaren Hohlkörper mit einer flexiblen Hülle.

Aufblasbare Hohlkörper werden für eine Vielzahl unterschiedlicher Verwendungen eingesetzt. GB-A-1 442 815 bezieht sich beispielsweise auf einen Reifen, der alle Merkmale des Oberbegriffs des Anspruchs 1 zeigt. Sie können unter anderem zu Isolierungs- oder Abdichtungszwecken benutzt werden oder auch als flexible Unterlage für Menschen oder Gegenstände dienen. Solche Hohlkörper bestehen üblicherweise aus einem elastischen und flexiblen Material, das praktisch nicht komprimierbar ist, zum Beispiel Gummi, Kunststoff oder dergleichen. Sollen sich diese Hohlkörper an Oberflächen mit Unebenheiten dichtend anschmiegen, so ist oft ein erheblicher Anpreßdruck erforderlich, wenn die Hülle des Hohlkörpers aus Festigkeitsgründen nicht zu stark elastisch ist und ein Nachziehen des Hüllenmaterials im Bereich von Einbuchtungen oder ähnlichen Unebenheiten in der Gegenfläche aufgrund von Reibungskräften erschwert ist. Außerdem hat ein derartiges Hüllenmaterial einen relative hohen Wärmeleitwert, so daß es zur Wärmeisolierung in der Regel nicht eingesetzt werden kann. Zudem ist dieser Wärmeleitwert bei einem gegebenen Hohlkörper nicht veränderbar.

Es ist daher die Aufgabe der vorliegenden Erfindung, einen Hohlkörper der anfangs genannten Art zu schaffen, der ein verbessertes Anschmiegverhalten besitzt und dessen Hülle außerdem gut wärmeisolierend ist, wobei der Wärmeleitwert des Hüllenmaterials veränderbar ist.

Diese Aufgabe wird erfindungsgemäß durch die im kennzeichnenden Teil des Anspruchs 1 angegebenen Merkmale gelöst. Vorteilhafte Ausgestaltungen des erfindungsgemäßen Hohlkörpers ergeben sich aus den Unteransprüchen.

Die Erfindung zeichnet sich dadurch aus, daß die Hülle zumindest teilweise aus einem Schaumstoff mit geschlossenen Hohlräumen besteht, deren Volumen durch den Druck des fließfähigen Mediums veränderbar ist. Die Hohlräume stellen Gas-, vorzugsweise Lufteinschlüsse dar, die stark wämeisolierend wirken. In Abhängigkeit von dem im Innern des Hohlkörpers herrschenden Druck werden diese Hohlräume mehr oder weniger stark komprimiert, so daß bei einem Druckanstieg im Innern des Hohlkörpers auch der Wärmeleitwert der Hülle zunimmt. Die Komprimierbarkeit des Hüllenmaterials bewirkt auch eine ausgezeichnete Anschmiegbarkeit des Hohlkörpers an eine Gegenfläche, da etwaige Unebenheiten auch durch Verschiebungen des Hüllenmaterials in sich ausgeglichen werden können.

Ein bevorzugtes Material für den Schaumstoff ist Neopren. Der Schaumstoff ist auf der Außenseite des Hohlkörpers vorteilhaft mit einem anderen Material beschichtet, durch das dem Hohlkörper weitere gewünschte Eigenschaften gegeben werden können. Dies kann beispielsweise ein Material sein, das besonders hautverträglich ist. Es kann auch weitgehend unelastisch sein, damit die Gestalt des aufgeblasenen Hohlkörpers unabhängig von in seinem Inneren herrschenden Druck praktisch unverändert ist. Für bestimmte Anwendungsfälle kann es sich empfehlen, für die Beschichtung ein hitzebeständiges Gewirk zu verwenden. Die Befestigung des Gewirks auf dem Schaumstoff erfolgt in üblicher Weise.

Für den steuerbaren Ein- und Austritt des fließfähigen Mediums ist der Hohlkörper vorzugsweise mit einem Ventil versehen. Die Steuerung des Ventils kann manuell oder selbsttätig erfolgen. Die selbsttätige Steuerung ist beispielsweise von der Temperatur an einem Meßpunkt abhängig, derart, daß je nach der gewünschten Temperaturänderung der Druck des fließfähigen Mediums im Hohlkörper erhöht oder gesenkt wird.

Die Erfindung wird im folgenden anhand eines in den Figuren dargestellten Ausführungsbeispiels näher erläutert. Hierbei zeigen:

Fig. 1a      einen Querschnitt durch einen Schaumstoff mit geschlossenen Poren im unbelasteten Zustand,

Fig. 1b      einen Querschnitt durch den Schaumstoff nach Fig. 1a im belasteten Zustand, und

Fig. 2      einen kugelförmigen Hohlkörper im aufgeblasenen Zustand.

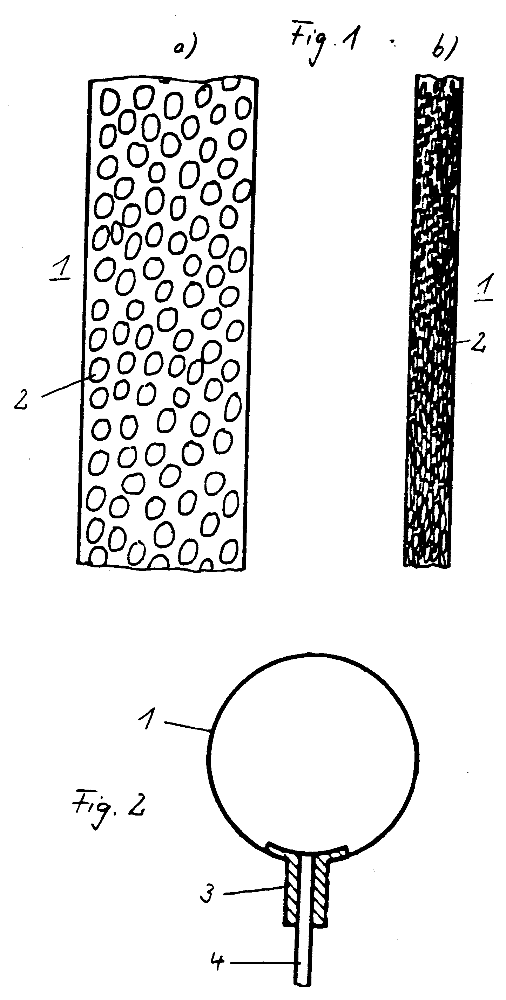

In Figur 1 ist der Querschnitt durch einen Abschnitt einer Hülle 1 eines Hohlkörpers dargestellt. Die Hülle 1 besteht vorzugsweise aus Neopren, das eine Vielzahl feiner Poren 2 enthält, die geschlossen und mit Luft gefüllt sind. Die Stärke der Hülle 1 ist über einen weiten Bereich variierbar und wird entsprechend dem jeweils gewünschten Verwendungszweck gewählt. Die Lufteinschlüsse haben zur Folge, daß die Hülle 1 ausgezeichnete wärmeisolierende Eigenschaften besitzt.

Wird von der Innenseite des Hohlkörpers her ein Druck auf die Hülle 1 ausgeübt, so kommt es infolge der begrenzten Elastizität des Hüllenmaterials und/oder des Gegendrucks einer nicht dargestellten, auf der Außenseite der Hülle angebrachten, weitgehend unelastischen Beschichtung zu einer Komprimierung des Hüllenmaterials in der in Figur 1b gezeigten Weise. Hierbei ist das Volumen der Poren 2 stark verringert, da damit das Volumen der eingeschlossenen Luft ebenfalls entsprechend verringert wurde, ist das Wärmeisolierungsvermögen der Hülle 1 wesentlich herabgesetzt. Anhand von Figur 1 läßt sich auch leicht erkennen, daß sich die Hülle 1 bei einem Anpressen an eine Gegenfläche leicht an diese anschmiegt, wobei Unebenheiten in der Gegenfläche durch entsprechende innere Verschiebungen im Hüllenmaterial zumindest teilweise ausgeglichen werden können.

Figur 2 zeigt einen aufgeblasenen Hohlkörper, dessen Hülle 1 kugelförmig ausgebildet ist. Die Hülle 1 kann beispielsweise so hergestellt werden, daß zwei flache Schaumstoffzuschnitte durch eine ringförmige Verklebung miteinander verbunden werden. In der Hülle 1 befindet sich eine Öffnung, in der mittels eines Befestigungsstutzens 3 das Ende eines Schlauches 4 befestigt ist. Der Ein- und Austritt eines fließfähigen Mediums, zum Beispiel Luft, in den Hohlkörper über den Schlauch 4 kann durch ein nicht dargestelltes Ventil gesteuert werden. Am anderen Ende des Schlauches 4 befindet sich eine Druckluftquelle. Es ist auch möglich, die Druckluftquelle selbst in geeigneter Weise zu steuern.

Die kugelförmige Gestalt des aufgeblasenen Hohlkörpers ist nur beispielhaft. Je nach der gewünschten Verwendung ist die Hülle des Hohlkörpers so ausgebildet, daß dieser im aufgeblasenen Zustand die jeweils gewählte Form annimmt.

Ein Anwendungsbeispiel des vorliegenden Formkörpers ist der Einsatz bei Taucheranzügen oder Schwimmwesten.Hierbei können sie zur Abdichtung sowie als Auftriebkörper benutzt werden. Zugleich ist ihre wärmeisolierende Wirkung in einem weiten Umfang steuerbar. Der vorliegende Hohlkörper läßt sich jedoch auch beispielsweise zu Isolationszwecken bei Behältern sowie in Gebäuden oder Fahrzeugen einsetzen.

## Patentansprüche

1. Durch ein fließfähiges Medium von innen mit Überdruck beaufschlagbarer Hohlkörper mit einer flexiblen Hülle, die zumindest einen aus einem Schaumstoff mit geschlossenen Hohlräumen (2) bestehenden inneren Teil, dessen Volumen durch den Druck des fließfähigen Mediums veränderbar ist, und einen weitgehend unelastischen äußeren Teil aufweist, **dadurch gekennzeichnet,** daß der äußere Teil aus einer Beschichtung aus einem Gewirk besteht.

2. Hohlkörper nach Anspruch 1, dadurch gekennzeichnet, daß ein den Ein- und Austritt des fließfähigen Mediums steuerbares Ventil vorgesehen ist.

3. Hohlkörper nach einem der Ansprüche 1 bis 2, dadurch gekennzeichnet, daß der Schaumstoff ein Chlopren-Polymerisat ist.

## Claims

1. Hollow body, which is internally loaded at positive pressure with a viscous medium, having a flexible sleeve, comprising at least one inner portion composed of a foam material with sealed cavities (2) and the volume of which is adjustable by means of the pressure of the viscous medium, and a substantially unelastic outer portion, **characterised in that** the outer portion is composed of layers of a fabric.

2. Hollow body according to claim 1**, characterised in that** a valve is provided for the control of the inlet and outlet of the viscous medium.

3. Hollow body according to one of claims 1 to 2, **characterized in that** the foam material is a chloroprene polymerisate.

## Revendications

1. Corps creux à enveloppe flexible qui, par un milieu fluide, peut être sollicité à partir de l'intérieur par une surpression et qui présente au moins une partie interne, qui est constituée d'une mousse à cavités fermées (2) et dont le volume peut être modifié par la pression du milieu fluide, et une partie externe profondément non élastique, caractérisé en ce que la partie externe est constituée d'un recouvrement en un tissu à mailles.

2. Corps creux suivant la revendication 1, caractérisé en ce qu'une soupape capable de commander l'entrée et la sortie du milieu fluide est prévue.

3. Corps creux suivant l'une des revendications 1 et 2, caractérisé en ce que la mousse est un produit de polymérisation de chloroprène.

Fig. 1

a)

b)

Fig. 2